# EUROPEAN PATENT APPLICATION

(11) **EP 4 079 503 A1**
(43) Date of publication of application: **26.10.2022**
(21) Application number: 22167816.2
(22) Date of filing: 12.04.2022
(51) Int. Cl.: B32B 3/26, B32B 1/02, B32B 3/12, B32B 29/00, B32B 29/06, B32B 29/08, B65D 65/40

(54) **METHOD AND APPARATUS FOR MAKING AN ALVEOLATE SUPPORT FOR PRODUCTS, PREFERABLY FOODSTUFFS, ALVEOLATE SUPPORT SO OBTAINABLE**

(30) Priority: 22.04.2021 IT 202100010307
(71) Applicant: Eurocartex S.p.A., 30020 Cinto Caomaggiore (VE) (IT)
(72) Inventor: TOPPAN, Flavio, 30020 Cinto Caomaggiore (VE) (IT)
(74) Representative: Giugni, Valter

(57) **Abstract**

The present invention relates to a method and an apparatus (400) for making an alveolate support (100) for products, preferably food products. The alveolate support (100) comprising a first plate-like body (102) provided with at least one through opening (112) and a second plate-like body (114) fixed to the first plate-like body (102) so as to close said at least one through opening (112) defining a respective at least one blind opening (116). Specifically, the first plate-like body (102) and optionally the second plate-like body (114) are formed with at least one multilayer paper cushion plate (PC1) comprising at least one embossed paper sheet (Le1, Lem). Furthermore, the present invention relates to an alveolate support (100) thus obtainable.

## Description

### TECHNICAL FIELD OF THE INVENTION

The present invention relates to a method and to an apparatus for making an alveolate support adapted to receive products preferably food products, more preferably confectionery products, such as chocolates, cookies, pralines, or the like, fruits or vegetables. Furthermore, the present invention relates to an alveolate support thus obtainable.

### STATE OF THE PRIOR ART

Packagings for food products comprising a box-like body containing an alveolate support adapted to receive confectionery products, such as chocolates, cookies, pralines or the like, and a multilayer paper cushion plate ("paper cushion pad") which is arranged above the alveolate support to protect the food products from any impact when the package is transported are known in the state of the art.

Patent documents FR2216813 and EP2607253 show packagings comprising a box-like body containing an alveolate support, that is a tray provided with alveoli or blind openings, which is adapted to receive and support said confectionery products.

Patent document GB1548841 shows a multilayer paper cushion plate comprising a plurality of paper sheets joined together, and wherein at least one of the sheets is embossed. In particular, the embossed paper sheets allow to obtain a laminated paper product having damping characteristics adapted to protect confectionery products.

In known packagings, the alveolate support is typically formed with polymeric materials, such as PET, PE, PP or the like, which are transformed by means of moulding techniques, thermoforming techniques, or the like.

The use of polymeric materials allows a vast range of possibilities for designing the shape and size of the alveolate support and it allows to obtain desired aesthetic characteristics, such as a given surface finish, a given colour, and the like. In this state, the alveolate support and the packaging are conferred a certain shape and/or a certain quality perceived by the end consumer for example based on the type of food product.

Furthermore, the polymeric material transformation techniques guarantee a high productivity and, as a result, a reduction in the costs for making alveolate supports.

However, in recent years, manufacturers and consumers have become more aware of the need to develop solutions with a lower environmental impact for a more sustainable exploitation of resources, by favouring materials from renewable sources with respect to those of fossil origin. Specifically, the use of polymeric materials of fossil origin, particularly in the packaging industry, has a great environmental impact and it is desirable to devise more environmentally friendly alternative solutions which meet the recyclability, disposal and sustainability requirements that are now required, and that will become increasingly stringent in the future.

For example, European Union directives 2018/852 and 2019/904 aim to increase the possibilities for recycling packagings and to reduce the environmental impact of certain plastic products, therefore promoting the use of sustainable materials. Besides such directives, national laws impose possible taxes on the production of disposable plastic articles, so as to discourage the use thereof.

Furthermore, the polymeric material transformation techniques require the use of appropriate equipment, such as presses, moulds, desiccation systems and the like, whose use and/or construction has a great environmental impact. For example, moulds for presses provide for a complex construction that is different depending on the needs depending on the shape and size of various alveolate supports.

Therefore, there arises the need to provide a solution which overcomes the drawbacks described above.

### SUMMARY OF THE INVENTION

The task of the present invention is to provide a method and an apparatus for making alveolate supports for products, preferably food products, more preferably confectionery products, such as chocolates, cookies, pralines, or the like, fruits or vegetables, which have a lower environmental impact with respect to the methods and apparatuses used to make alveolate supports of the known type.

In the context of the task outlined above, an object of the present invention relates to a method and an apparatus which use materials from renewable sources, alternative to polymeric ones of fossil origin, to make the alveolate supports.

A further object relates to a method and an apparatus which use equipment having a lower environmental impact with respect to the methods and apparatuses used to make alveolate supports of the known type.

A further object relates to a method and an apparatus adapted to make alveolate supports which ensure effective packaging and protection of products, preferably food products, more preferably confectionery products.

A further object relates to a method and an apparatus which allow a vast range of possibilities for designing the shape and size of the alveolate supports.

A further object relates to a method and an apparatus which allow to obtain desired aesthetic characteristics of the alveolate supports, conferring them a certain quality perceived depending on the product.

A further object relates to a method and an apparatus which ensure a high productivity and a reduction of the costs for making the alveolate supports.

A further object relates to an alveolate support for products, preferably food products, more preferably confectionery products, which is formed of materials from renewable sources, alternative to polymeric ones of fossil origin, and which can be disposed of in an ecological manner.

A further object relates to an alveolate support which ensures effective packaging and protection of products, preferably food products, more preferably confectionery products.

A further object relates to an alveolate support which envisages a vast range of possibilities for designing the shape and size.

A further object relates to an alveolate support whose construction allows to obtain desired aesthetic characteristics.

The aforementioned tasks and objects, as well as others which will be more apparent from the following description, are achieved through a method, as defined in the independent claim 1, an apparatus, as defined in the independent claim 6, and an alveolate support, as defined in the independent claim 8. Preferred embodiments are defined in the dependent claims.

### BRIEF DESCRIPTION OF THE FIGURES

The further characteristics and advantages of the alveolate support, of the method, and of the apparatus for making it according to the present invention will become more apparent in the following description relating to embodiments provided purely by way of non-limiting example, with reference to the following figures, wherein:
- Fig. 1 shows a perspective view of a packaging comprising an alveolate support, according to a preferred embodiment of the present invention;
- Fig. 2 shows a perspective view of the alveolate support of Fig.1;
- Fig. 3 shows a first exploded perspective view of the alveolate support of Fig. 2;
- Fig. 4 shows a second exploded perspective view of the alveolate support of Fig. 2;
- Fig. 5 shows a schematic view of a section of a first plate-like body of the alveolate support of Fig. 2;
- Fig. 6 shows a first perspective view of a first plate-like body in a first step of the method for making the alveolate support of Fig. 2 according to a preferred embodiment of the present invention;
- Fig. 7 shows a second perspective view of the first plate-like body of Fig. 6;
- Fig. 8 shows a first perspective view of the first plate-like body of Fig. 6 in a second step of the method for making the alveolate support;
- Fig. 9 shows a second perspective view of the first plate-like body of Fig. 8;
- Fig. 10 shows a first perspective view of the first plate-like body of Figs. 8 and 9 in a third step of the method for making the alveolate support;
- Fig. 11 shows a first perspective view of the first plate-like body and a second plate-like body in a fourth step of the method for making the alveolate support;
- Fig. 12 shows a second perspective view of the first plate-like body and of the second plate-like body of Fig. 11;
- Fig. 13 shows a perspective view of the alveolate support formed at the end of a fifth step of the method for making it;
- Fig. 14 shows an apparatus for making an alveolate support, according to a preferred embodiment of the present invention.

### DETAILED DESCRIPTION OF THE INVENTION

In the following description reference will be made to a method and to an apparatus for making an alveolate support, wherein the latter is adapted for packaging products, preferably food products, more preferably confectionery products, such as chocolates, cookies, pralines, or the like, fruits or vegetables. However, such reference is provided purely by way of non-limiting example, given that the alveolate support according to the present invention can be used for packaging further products which require possible protection, such as for example electrical/electronic components, mechanical components, jewellery products, perfumery products, and the like.

### PACKAGING

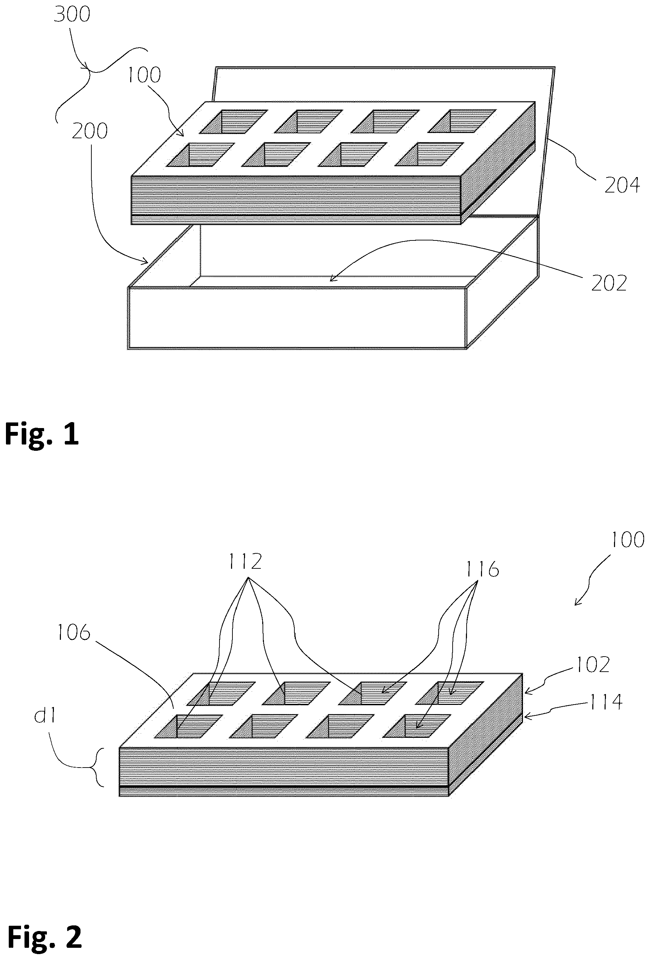

Fig. 1 shows a packaging 300 comprising a box-shaped casing 200 and an alveolate support 100 adapted to receive products, preferably food products, for example confectionery products, according to a preferred embodiment of the present invention.

The box-shaped casing 200, preferably made of paper, cardboard, stretched cardboard or other material, comprises a plurality of walls (not numbered in the figure) defining a cavity 202, and a lid 204 adapted to reversibly close said cavity 202. In particular, the cavity 202 is configured to receive, preferably to size, the alveolate support 100.

In the present preferred embodiment, the lid 204 is hinged to the walls which define the cavity 202 of the box-shaped casing 200. However, this embodiment is not limiting and, according to known constructions, the lid 204 can be provided separate from the walls which define the cavity 202. Alternatively, the box-shaped casing 200 may not comprise the lid 204.

### ALVEOLATE SUPPORT

Particularly with reference to Figs. 2 to 5, the alveolate support 100 comprises a first plate-like body 102 and a second plate-like body 114 which are provided separate and subsequently fixed to each other. In other words, the first plate-like body 102 and the second plate-like body 114 are initially separated from each other, that is they are not provided as a single body with respect to each other, and they are subsequently joined to form the alveolate support 100, as better explained below.

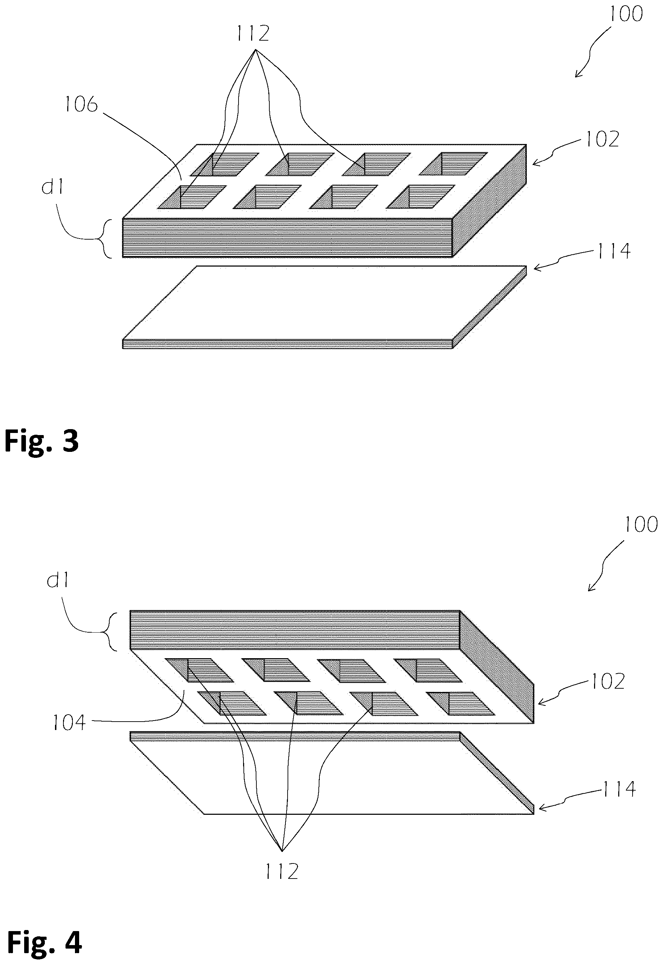

The first plate-like body 102, having in this preferred embodiment a flat parallelepiped shape, is provided with a first surface 104 and a second surface 106 (better visible respectively in Figs. 4 and 3). The first surface 104 and the second surface 106 are opposite to each other and separated by a thickness d1 of said first plate-like body 102.

The first plate-like body 102 is further provided with at least one through opening 102, more preferably with a plurality of through openings 112 which pass through said thickness d1 and which are configured to receive said food products. Preferably, the through openings 112 are formed spaced apart from the edge of the first plate-like body 102.

The second plate-like body 114, having in this preferred embodiment a flattened parallelepiped shape, is fixed to the first surface 104 of the first plate-like body 102 so as to close - on one side - the through openings 112 defining respective blind openings 116 which, therefore, are configured to receive and support said food products. The expression "blind openings" is used to indicate alveoli, recesses or openings adapted to receive and support the food products and whose bottom, defined by the second plate-like body, is continuous, that is without through holes, or it is substantially continuous, except for through holes having size and/or shape such to prevent the products from passing through the bottom of each blind opening.

In the most preferred embodiment, the second plate-like body 114 is fixed to the first surface 104 of the first plate-like body 102 using a gluing substance, more preferably a gluing substance suitable for food contact.

In particular, according to the present invention, the first plate-like body 102 and optionally the second plate-like body 114 are formed with at least one multilayer paper cushion plate PC1 comprising at least one embossed paper sheet, from Le1 to Lem.

In the most preferred embodiment, both the first plate-like body 102 and the second plate-like body 114 are formed with at least one multilayer paper cushion plate PC1 comprising at least one embossed paper sheet, from Le1 to Lem. In this state, greater protection of the food product is ensured.

In further embodiments, the first plate-like body 102 is formed with at least one multilayer paper cushion plate PC1 comprising at least one embossed paper sheet, from Le1 to Lem, while the second plate-like body 114 is formed with a paper sheet (preferably having a grammage at most of about 100 g/m²), a stretched cardboard sheet (preferably having a grammage comprised between 120 and 300 g/m²), combinations thereof, or the like.

In the present invention, the expression "multilayer paper cushion plate" is used to indicate a laminated paper product comprising a plurality of paper sheets coupled to each other, wherein at least one of the inner sheets is embossed having a plurality of relief and depression portions centred at certain points. This allows to have points at which three-dimensionality is provided to the substantially planar structure of the sheet.

As known, the paper is embossed using machines which apply a pressure on the surface of a paper sheet, for example by means of cylinders or rollers having a relief pattern on the surface defined by a plurality of engraving elements. In this manner, a deformation of the sheet (preferably hot) is induced locally, generating a plurality of separate points, that is a plurality of separate regions centred on such points, which confer three-dimensionality. Generally, the points or regions that confer three-dimensionality are variously distributed on the surface of the paper sheet obtaining a regular pattern, for example of the honeycomb type, or irregular pattern. In particular, in the present document, the expression "embossed" does not include a surface roughness imparted to a sheet, wherein said surface roughness does not form any predetermined pattern visible to the naked eye.

In particular, the expression "multilayer paper cushion plate" is used to indicate a laminated paper product in which said at least one embossed sheet confers resilience characteristics which allow, by manually applying a compression force along the thickness thereof, to deform the plate and, when the compression force is removed, a return to the initial shape.

In this manner, the multilayer paper cushion plate ensures softness and elasticity adapted to protect the food products contained in the alveolate support 100. These resilience characteristics distinguish the multilayer paper cushion plate from other products, such as corrugated cardboards having linear portions which confer three-dimensionality, and which do not return to an initial shape at the end of a compression thereof along the thickness.

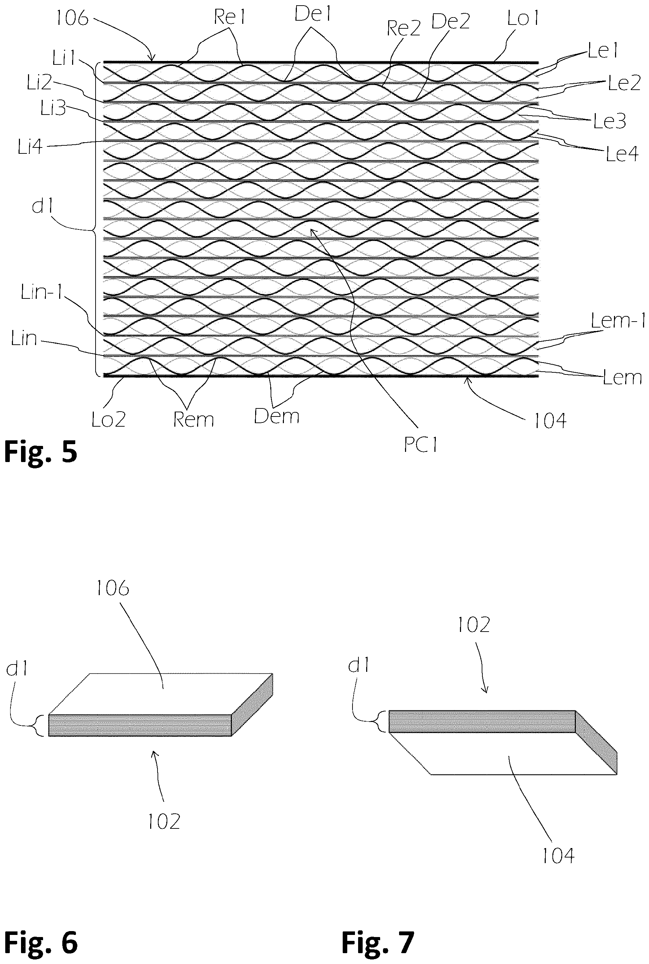

In particular as shown in Fig. 5, which is a schematic view of a section of the first plate-like body 102, a multilayer paper cushion plate PC1 comprises, in this preferred embodiment, two substantially flat outer sheets, Lo1 and Lo2, and between which there are stacked a plurality of intermediate sheets, from Li1 to Lin, in turn substantially flat.

Furthermore, a plurality of embossed paper sheets, from Le1 to Lem, is arranged between the substantially flat sheets (Lo1, Lo2 and from Li1 to Lin). In particular, each of the embossed paper sheets (Le1 to Lem) is coupled, that is joined, through respective relief (from Re1 to Rem) and recess (from De1 to Dem) portions to pairs of adjacent flat sheets (Lo1, Lo2 and from Li1 to Lin). It should be observed that Fig. 5 each embossed paper sheet, from Le1 to Lem, is shown with a thick undulated line and a thin undulated line staggered with respect to each other so as to show the distinct and staggered points at which three-dimensionality is conferred in the same embossed paper sheet, when viewed along a direction perpendicular to the sectional plane of Fig. 5.

Preferably, still with reference to the embodiment shown in Fig. 5, the two outer sheets, Lo1 and Lo2, of the multilayer paper cushion plate PC1 respectively define the second surface 106 and the first surface 104 of the first plate-like body 102. Furthermore, in this preferred embodiment, the stack of sheets (outer, inner and embossed) of the multilayer paper cushion plate PC1 defines the thickness d1 of the first plate-like body 102.

In further embodiments, a multilayer paper cushion plate PC1 may comprise two outer sheets, Lo1 and Lo2, between which are stacked only embossed paper sheets, from Le1 to Lem, which are joined together through respective relief, from Re1 to Rem, and recess, from De1 to Dem, portions. In other words, in this further embodiment, the multilayer paper cushion plate PC1, unlike the embodiment shown in Fig. 5, does not comprise the plurality of intermediate sheets, from Li1 to Lin.

Alternatively, a multilayer paper cushion plate PC1 may not comprise at least one of the two outer sheets, Lo1 and Lo2. For example, the multilayer paper cushion plate PC1 may not comprise the outer sheet Lo2, and the embossed paper sheet Lem defines the first surface 104 of the first plate-like body 102.

Preferably, the embossed paper sheets, from Le1 to Lem, are formed with paper selected from the group comprising kraft paper (white, brown or coloured), and the like.

Furthermore, the embossed paper sheets, Le1 to Lem, are formed with paper having preferably a grammage comprised between 10 and 140 g/m² (grams/square metre) or between 10 and 100 g/m², more preferably between 25 and 50 g/m², even more preferably comprised between 30 and 45 g/m². These grammage intervals of the embossed paper sheets, from Le1 to Lem, are adapted to confer the aforementioned resilience characteristics to the multilayer paper cushion plate PC1. In particular, resilience characteristics which are more adapted to protect the products are obtained as the grammage decreases, and the intervals between 25 and 50 g/m² or between 30 and 45 g/m² confer the best characteristics. As a matter of fact, other products, such as corrugated cardboards, which have grammage comprised between 150 and 440 g/m² (in particular between 150 and 210 g/m² for corrugated sheets), do not show resilience characteristics, having, in particular, a different structure than that of embossed paper sheets given that they provide for linear portions which confer three-dimensionality, as mentioned above. Therefore, advantageously, the embossed paper sheets, from Le1 to Lem, provide for structure and mechanical properties adapted to confer said resilience characteristics to the multilayer paper cushion plate PC1 and, selecting them suitably, characteristics of suitability for contact with food products.

Preferably, at least one of the outer sheets, Lo1 and Lo2, is formed with paper selected from the group comprising parchment paper (glassine paper), kraft paper, mono-glazed paper, mono-coated paper, greaseproof paper, wet-strength paper (WS), metalized paper, (white, brown or coloured), and the like. The choice of the type of paper, advantageously allows the multilayer paper cushion plate PC1 and the alveolate support 100 to be suitable for contact with food products.

Furthermore, the outer sheets, Lo1 and Lo2, are formed with paper having preferably a grammage comprised between 18 and 100 g/m² (grams/square metre).

Preferably, the intermediate sheets, from Li1 to Lin, are formed with paper selected from the group comprising wrapping tissue, mono-glazed paper, kraft paper (white, brown or coloured), and the like.

Furthermore, the intermediate sheets, from Li1 to Lin, are formed with paper having preferably a grammage comprised between 15 and 100 g/m² (grams/square metre).

Advantageously, in this state the alveolate support 100 is formed with paper-based material, that is cellulose-based, which is an environmentally friendly material obtained from a renewable source. Therefore, the alveolate support 100 according to the present invention ensures a low environmental impact for a more sustainable exploitation of resources, with respect to the polymeric materials of fossil origin with which the alveolate supports of the known type are formed.

Furthermore, advantageously, the shape and size characteristics of the first plate-like body 102, of the second plate-like body 114, and of the plurality of through openings 112 can be widely selected depending on the characteristics of the food products and/or of the packaging 300.

For example, the number and/or arrangement and/or shape of the through openings 112, which define the blind openings 116, can be widely selected at the design stage depending on the number and/or shape and/or size of each of the food products to be inserted into the alveolate support 100.

In particular, the thickness d1 of the first plate-like body 102 can be selected depending on the size of the food products so as to appropriately contain them inside the blind openings 116. For example, the thickness d1 can be selected by varying the number of sheets which form the multilayer paper cushion plate PC1 forming the first plate-like body 102. Alternatively, the thickness d1 can be selected by varying the embossing characteristics of the embossed paper sheets, from Le1 to Lem, so as to increase or decrease the difference in height between the respective relief portions, from Re1 to ReM, and the recess portions, from De1 to Dem.

Furthermore, the shape and size of the first plate-like body 102 and of the second plate-like body 114 can be widely selected. For example, the first 102 and second 114 plate-like bodies can be square, rectangular, circular, oval, irregular, heart-shaped, star-shaped, or the like. These shapes can be advantageously obtained with devices relatively simple to design, such as for example die-cutters. Possibly, the shape and size of the first plate-like body 102 and of the second plate-like body 114 can be selected depending on the characteristics of the box-shaped casing 200.

Furthermore, advantageously, the alveolate support 100 according to the present invention provides an adequate protection of the food product given that the first plate-like body 102 and optionally the second plate-like body 114 are each formed with at least one multilayer paper cushion plate PC1. In further embodiments, the first plate-like body 102 is formed with at least one multilayer paper cushion plate PC1 comprising at least one embossed paper sheet, from Le1 to Lem, while the second plate-like body 114 is formed with a paper sheet (preferably having a grammage at most of about 100 g/m²), a stretched cardboard sheet (preferably having a grammage comprised between 120 and 300 g/m²), combinations thereof, or the like.

Furthermore, advantageously, the aesthetic characteristics of the multilayer paper cushion plate PC1 can be widely selected to obtain a certain quality perceived depending on the food product. In particular, the type of sheets which form the multilayer paper cushion plate PC1, or a portion thereof can be widely selected to this end. For example, the type of outer sheet Lo1 which defines the second surface 106 of the first plate-like body 102 can be suitably selected so as to confer to the alveolate support 100 the desired aesthetic characteristics.

Furthermore, advantageously, the characteristics of the multilayer paper cushion plate PC1 ensure lightness of the alveolate support 100.

It is clear that the alveolate support 100 described above can be subjected to various modifications without departing from the scope of protection as defined in the respective independent claim.

In the description above, the first plate-like body 102, the second plate-like body 114, and the through openings 112 are substantially rectangular or square-shaped. However, the shape and size of the first plate-like body 102, of the second plate-like body 114, and of the through openings 112 can be suitably selected for example depending on the shape and size of the food products and/or of the box-shaped casing 200 of the packaging 300 (square, rectangular, circular, oval, irregular, heart-shaped, star-shaped, or the like).

Furthermore, in the description above, the through openings 112 which define the blind openings 116 are arranged according to a square or rectangular pattern. However, the through openings 112 may be arranged according to other patterns, for example in a hexagon, triangular, circular, spiral-like pattern or the like, or according to an irregular or symmetrical pattern with respect to a medial or sagittal plane of the alveolate support 100.

Furthermore, in the description above, the first plate-like body 102 is formed with a single multilayer paper cushion plate PC1, on which the plurality of through openings 112 is formed. However, further embodiments in which the first plate-like body 102 is formed by a plurality of multilayer paper cushion plates can be provided for. For example, the first plate-like body 102 can be formed by two or more multilayer paper cushion plates which are provided separately and, subsequently, stacked and fixed to each other, using a gluing substance. In this condition, a first plate-like body 102 on which a plurality of through openings 112 which pass through each of the multilayer paper cushion plates is formed, is obtained. Possibly, in this case, concave through openings 112 can be formed by suitably varying the size of the corresponding removal portions of each cushion plate forming the first plate-like body 102.

### METHOD FOR MAKING THE ALVEOLATE SUPPORT

With reference to Figs. 6 to 13 together with Fig. 5, below is the description of a method, according to a preferred embodiment of the present invention, for making the alveolate support 100 described above.

Particularly with reference to Figs. 6 and 7, first and foremost there is provided the first plate-like body 102, provided with the first surface 104 and with the second surface 106 which are opposite to each other and separated by the thickness d1 of said first plate-like body 102.

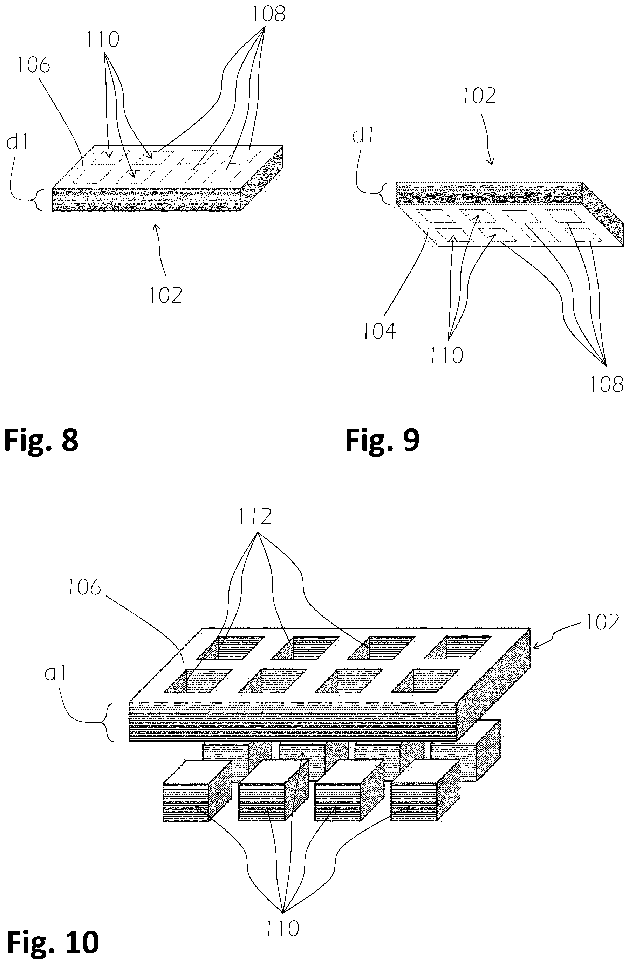

Therefore, particularly with reference to Figs. 8 and 9, the set of notches 108 which pass through said thickness d1 so as to define at least one removal portion 110, more preferably a plurality of removal portions 110, of said first plate-like body 102 is formed on the first plate-like body 102.

Subsequently, particularly with reference to Fig. 10, a pressure is applied at said removal portions 110 so as to remove them from the first plate-like body 102 forming at least one through opening 112, more preferably a plurality of through openings 112 which pass through said thickness d1. In particular, the plurality of through openings 112 are configured to receive said food products.

In the present invention, the expression "applying a pressure" is used to indicate a pressure or force exerted on at least a portion of the first plate-like body 102, which is adapted to remove the removal portions 110. For example, the pressure can be exerted by mechanical means, such as for example a punch or a pressure device having a head provided with suitable relief elements (male elements) configured to apply said pressure at the removal portions 110 only. Alternatively, the pressure can be exerted by further means, for example compressed air means, configured to apply a pressure at the removal portions 110 only, so as to remove the latter from the first plate-like body 102.

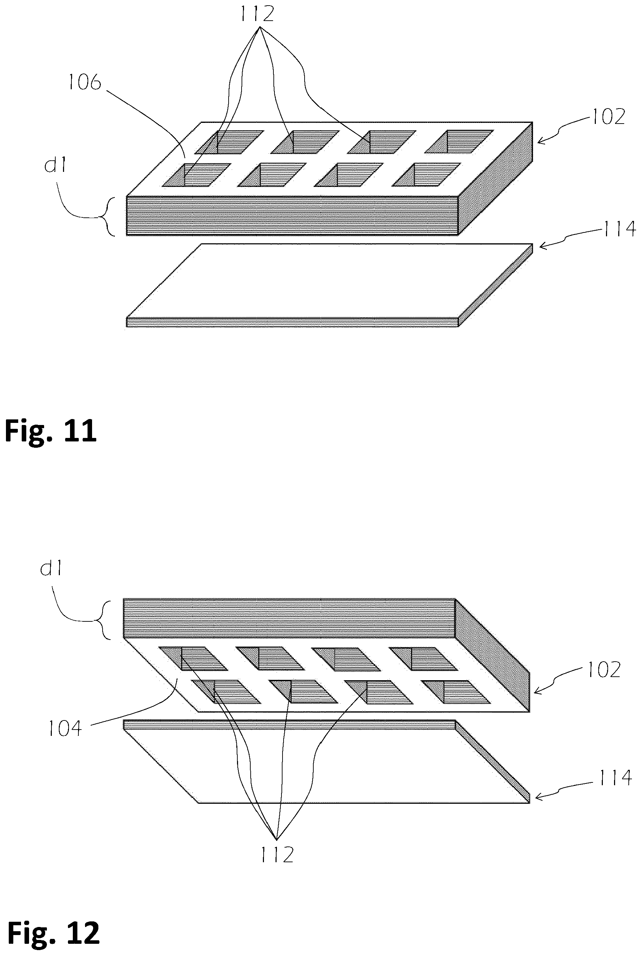

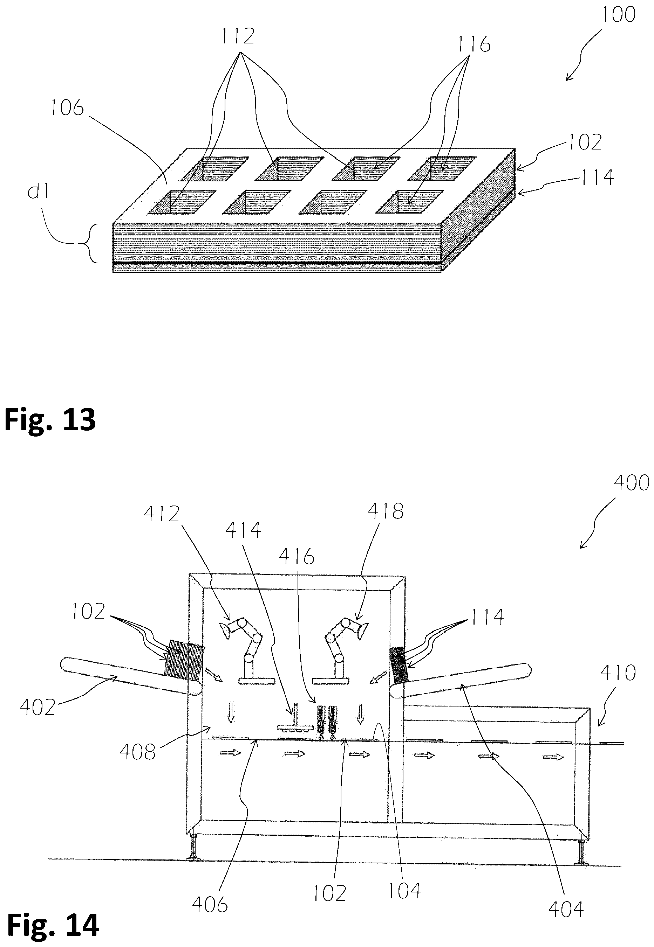

Subsequently, particularly with reference to Figs. 11 and 12, the second plate-like body 114 is provided, the latter being provided distinct that is separated from said first plate-like body 102. Particularly with reference to Fig. 13, the second plate-like body 114 is fixed, preferably using a gluing substance, to the first surface 104 of the first sheet-like body 102 so as to close - on one side - the plurality of through openings 112 defining the respective blind openings 116, configured, therefore, to receive and support said food products.

In a more preferred embodiment, the second plate-like body 114 is fixed to the first surface 104 of the first plate-like body 102 using a gluing substance suitable for contact with food products. Gluing substance suitable for contact with food products are particularly adapted for forming alveolate supports 100 for food products.

In particular, as mentioned above, according to the present invention, the first plate-like body 102 and optionally the second plate-like body 114 are formed with at least one multilayer paper cushion plate PC1 comprising at least one embossed paper sheet Le1, Lem.

In the most preferred embodiment, both the first plate-like body 102 and the second plate-like body 114 are formed with at least one multilayer paper cushion plate PC1 comprising at least one embossed paper sheet, from Le1 to Lem. In this state, greater protection of the food product is ensured, as mentioned above.

Advantageously, in this manner the alveolate support 100 is formed with paper-based material, that is cellulose-based, which is an environmentally friendly material obtained from a renewable source. Therefore, the advantages of the alveolate support 100 are obtained through the present method, as mentioned above.

In particular, the alveolate support 100 is produced through the present method starting from plate-like bodies formed with multilayer paper cushion plates PC1, and using techniques and equipment having a lower environmental impact with respect to those used to produce the alveolate supports made of polymeric materials of the known type.

Furthermore, advantageously, the present method allows a vast range of possibilities for designing the shape and size of the alveolate support 100, by suitably selecting the shape and size of the first plate-like body 102, of the second plate-like body 114, and of the through openings 112.

Furthermore, advantageously, the present method allows a vast range of possibilities for selecting the characteristics of the multilayer paper cushion plates PC1 in order to provide desired protection, aesthetic, and lightness characteristics of the alveolate support 100.

In the present preferred embodiment, the method for making the alveolate support 100 envisages that the set of notches 108 be previously formed by cutting said first plate-like body 102 using notching means, and that, subsequently, a pressure be applied at said removal portions 110 using pressure means distinct from said notching means. However, an embodiment in which the set of notches 108 and the respective removal portions 110 are formed and removed, substantially in the same step, using the same die-cutter/punching device, can be provided for.

### APPARATUS FOR MAKING THE ALVEOLATE SUPPORT

With reference to Fig. 14 together with Figs. from 6 to 13, below is described an apparatus, according to a preferred embodiment of the present invention, for making an alveolate support 100 preferably according to the method described above.

Specifically, the apparatus 400 comprises a first feeding section 402, a second feeding section 404, transport means 406, first handling means 412, pressure means 414, glue application means 416, second handling means 418 and, preferably, an electronic control unit (not shown in the figure) adapted to coordinate the actuation of the various components so as to implement the forming method, as mentioned above.

The first feeding section 402 is configured to receive and preferably temporarily store at least one first plate-like body 102 having the characteristics described above. In the most preferred embodiment, the first feeding section 402 is configured to receive and temporarily store at the same time a plurality of first plate-like bodies 102, provided distinct from each other. The first plate-like bodies 102 are suitably arranged, for example in a row, stacked together, arranged side by side, arranged individually, or any other arrangement.

In the present embodiment, the first section 402 is a preferably inclined shelf on which there is arranged a plurality of first plate-like bodies 102 arranged in a row. The inclination of the shelf is adapted to make the first plate-like bodies 102 slide by gravity toward the first handling means 412. However, this construction is not limiting and the first section 402 may provide for further constructions.

Each plate-like body 102 is provided with the first surface 104 and with the second surface 106 which are opposite to each other and separated by the thickness d1 of said first plate-like body 102.

Furthermore, each plate-like body 102 is provided with the set of notches 108 which pass through said thickness d1 so as to define at least one removal portion 110, more preferably a plurality of removal portions 110 in each first plate-like body 102 (as described above with reference to the steps of the method of Figs. 8 and 9).

The second feeding section 404 is configured to receive and preferably temporarily store at least one second plate-like body 114 having the characteristics described above. In the most preferred embodiment, the second feeding section 404 is configured to receive and temporarily store at the same time a plurality of second plate-like bodies 114, provided distinct from each other. The second plate-like bodies 114 are suitably arranged, for example in a row, stacked together, arranged side by side, arranged individually, or any other arrangement.

In the present embodiment, the second section 404 is a preferably inclined shelf on which there is arranged a plurality of second plate-like bodies 114 arranged in a row. The inclination of the shelf is adapted to make the second plate-like bodies 114 slide by gravity toward the second handling means 418. However, this construction is not limiting and the second section 404 may provide for further constructions.

The transport means 406 are configured to transport the first plate-like bodies 102, preferably singularized, from a first inlet section 408 toward an outlet section 410 of the apparatus 400. In particular, the pressure means 414 and the glue application means 416 are arranged along the transport means 406, between the first inlet section 408 and the outlet section 410.

In the present embodiment, the transport means 406 are formed by two conveyor belts arranged parallel to each other and spaced apart by a space adapted to allow the ejection of the removal portions 110 from the first plate-like bodies 102 using the pressure means 414, as explained below. However, this construction is not limiting and the transport means 406 may provide for further constructions. For example, the transport means 406 may comprise a plurality of trays configured to slide along appropriate guides. In particular, said trays are adapted to receive the first plate-like bodies 102 and they are centrally perforated to allow the ejection of the removal portions 110.

The first handling means 412 are configured to move a first plate-like body 102 from the first feeding section 402 on the transport means 406, at the first inlet section 408.

In the present embodiment, the first handling means 412 are substantially formed by a robotic arm preferably provided with releasable pick-up means, or by other types of handling means provided with releasable pick-up means, such as a suction cup element, or the like. However, this construction is not limiting and the first handling means 412 may provide for further constructions. For example, the second handling means 418 may comprise a cartesian movement system provided with releasable pick-up means. Furthermore, in said first handling means 412, said releasable pick-up means, configured to pick up the first plate-like body 102 from the first feeding section 402 and release it on the transport means 406, can provide for various constructions, such as grippers or a suction system configured to releasably collect by activating/deactivating a depression or a vacuum by means of vacuum generating means.

The pressure means 414, preferably arranged substantially downstream of the first handling means 412, are configured to apply a pressure at the removal portions 110 so as to remove them from the first plate-like body 102 forming at least one through opening 112, more preferably a plurality of through openings 112 which pass through the thickness d1 (as described above with reference to the steps of the method of Fig. 10).

In the present embodiment, the pressure means 414 are formed by a pressure device provided with a head having a plurality of relief elements suitably shaped to engage and eject the removal portions 110 from the first plate-like body 102. However, this construction is not limiting and the pressing means 414 may provide for further constructions.

The glue application means 416, preferably arranged substantially downstream of the pressure means 414, are configured to provide a gluing substance on at least a portion of the first surface 104 of the first plate-like body 102, that is on at least a portion of the surface of the first plate-like body that faces toward said glue application means 416. Preferably, the glue application means 416 are configured to provide a gluing substance suitable for contact with food products.

In the present embodiment, the glue application means 416 are formed by one or more devices adapted to spray or to pour the gluing substance onto one or more portions of the first surface 104 of the first plate-like body 102. However, this construction is not limiting and the glue application means 416 may provide for further constructions. For example, in a particularly preferred embodiment, the glue application means 416 are configured to spray or to pour, that is to provide, one or more drops of gluing substance only in predetermined one or more areas of the first surface 104 of the first plate-like body 102. In this state, it is possible to obtain one or more gluing points having given size suitable to ensure, at the same time, adequate bond between the first plate-like body 102 and the second plate-like body 114 and use of small amounts of gluing substance for a low environmental impact. Preferably, said one or more drops of gluing substance are provided using a respective plurality of dispensing devices, or using a single dispensing device provided with a plurality of suitably arranged dispensing outlets.

The second handling means 418, preferably arranged substantially downstream of the glue application means 416, are configured to move a second plate-like body 114 from the second feeding section 404 and to couple it to the respective first plate-like body 102 at said first surface 104 which is provided with said gluing substance. In this state, the plurality of through openings 112 of the first plate-like body 102, defining a respective plurality of blind openings 116 is closed (as described above with reference to the steps of the method of Figs. 11 to 13).

In the present embodiment, the second handling means 418 are substantially formed by a robotic arm preferably provided with releasable pick-up means, or by other types of handling means provided with releasable pick-up means, such as a suction cup element, or the like. However, this construction is not limiting and the second handling means 418 may provide for further constructions. For example, the second handling means 418 may comprise a cartesian movement system provided with releasable pick-up means. Furthermore, in said second handling means 418 such releasable pick-up means, configured to pick up the second plate-like body 114 from the second feeding section 404 and release it at said first surface 104 of the respective first plate-like body 102, can provide for various constructions, such as grippers or a suction system configured to releasably collect by activating/deactivating a depression or a vacuum by means of vacuum generating means.

In this state, it is formed the alveolate support 100 which, by means of the transport means 406, is transported toward the outlet section 410 for possible further steps, such as for example labelling and/or stacking using a suitable machine and/or boxing, inserting the products, or the like.

In a further preferred embodiment, the apparatus 400 further comprises cutting means (not shown in the figure) which are arranged upstream of the first feeding section 402. Specifically, said cutting means are configured to form the set of notches 108 so as to define respective removal portions 110 on a plurality of first plate-like bodies 102, before the latter are arranged in the first feeding section 402.

Advantageously, as mentioned previously relating to the method, this allows to form the alveolate support 100 using paper-based material, that is cellulose-based, which is an environmentally friendly material obtained from renewable sources. Therefore, the advantages of the alveolate support 100 and of the method for making it are obtained through the present apparatus as mentioned above.

In particular, the alveolate support 100 is produced by means of the present apparatus 400 starting from plate-like bodies formed with multilayer paper cushion plates PC1, and using techniques and equipment having a lower environmental impact with respect to those used to produce the alveolate supports made of polymeric materials of the known type.

Furthermore, advantageously, the apparatus 400 ensures a high productivity and, as a result, a reduction of the costs for making the alveolate supports 100.

Furthermore, advantageously, the apparatus 400 ensures a high reliability and precision of execution of the method for making the alveolate supports 100, according to the present invention.

In the light of the above, it is clear that significant results have been achieved, overcoming the prior art drawbacks, allowing to provide an alveolate support 100 for preferably food products, a method for making it, and an apparatus for carrying out such a method, which have a lower environmental impact with respect to the alveolate supports, methods, and apparatuses of the known type.

As a matter of fact, the alveolate support 100 comprises, according to the present invention, materials alternative to polymeric ones of fossil origin while providing, at the same time, effective packaging and protection of the products.

Furthermore, the method and the apparatus for making the alveolate support 100, according to the present invention, ensure a vast range of possibilities of design and high productivity.

Naturally, the materials and equipment used to implement the present invention, as well as the shape and dimensions of the individual components, may be the most suitable depending on the specific requirements.

## Claims

1. Method for making an alveolate support (100) for products, in particular for food products, said method comprising the steps of:
a) providing a first plate-like body (102) provided with a first surface (104) and a second surface (106) opposite the first surface (104) and spaced each other by a thickness (d1),
b) forming on said first plate-like body (102) an assembly of notches (108) which pass through said thickness (d1) so as to define at least one respective removal portion (110) of said first plate-like body (102),
c) applying a pressure at said at least one removal portion (110) so as to remove it from said first plate-like body (102) forming at least one through opening (112) which passes through said thickness (d1),
said at least one through opening (112) being configured to receive at least one of said products,
d) providing a second plate-like body (114) distinct from said first plate-like body (102),
e) fixing said second plate-like body (114) to said first surface (104) so as to close said at least one through opening (112) defining a respective at least one blind opening (116), wherein
said first plate-like body (102) and optionally said second plate-like body (114) are formed with at least one multilayer paper cushion plate (PC1) comprising at least one embossed paper sheet (Le1, Lem).

2. The method for making an alveolate support (100) according to claim 1, wherein both said first plate-like body (102) and said second plate-like body (114) are formed with at least one multilayer paper cushion plate (PC1) comprising at least one embossed paper sheet (Le1, Lem).

3. The method for making an alveolate support (100) according to claim 1 or 2, wherein said at least one embossed paper sheet (Le1, Lem) is formed with a paper sheet having a grammage of 10 to 140 g/m², or of 10 to 100 g/m², or of 25 to 50 g/m², or of 30 to 45 g/m².

4. The method for making an alveolate support (100) according to any of the preceding claims, wherein said step b) and said step c) are distinct steps,
said assembly of notches (108) being firstly formed by notching said first plate-like body (102) by means of notching means, and
being then applied said pressure at said at least one removal portion (110) by means of pressure means (410) distinct from said notching means.

5. The method for making an alveolate support (100) according to any of the preceding claims, wherein said second plate-like body (114) is fixed to said first surface (104) of said first plate-like body (102) by means of a gluing substance.

6. Apparatus (400) for making an alveolate support (100) for products, in particular for food products, said apparatus (400) comprising:
- a first feeding section (402) configured to receive a plurality of first plate-like bodies (102), wherein
each of said plurality of first plate-like bodies (102) is provided with a first surface (104) and a second surface (106) opposite the first surface (104) and spaced each other by a thickness (d1),
each of said plurality of first plate-like bodies (102) being further provided with an assembly of notches (108) which pass through said thickness (d1) so as to define at least one respective removal portion (110),
- a second feeding section (404) configured to receive a plurality of second plate-like bodies (114),
- transport means (406) configured to transport said first plate-like bodies (102) from a first inlet section (408) to an outlet section (410) of said apparatus (400),
- first handling means (412) configured to move a first plate-like body (102) of said plurality of first plate-like bodies (102) from said first feeding section (402) onto said transport means (406) at said first inlet section (408), said first handling means (412) being provided with releasable pick-up means,
- pressure means (414) configured to apply a pressure at said at least one removal portion (110) so as to remove it from said first plate-like body (102) forming at least one through opening (112) which passes through said thickness (d1),
- glue application means (416) configured to provide a gluing substance on at least a portion of said first surface (104) of said first plate-like body (102),
- second handling means (418) configured to move a second plate-like body (114) of said plurality of second plate-like bodies (114) from said second feeding section (404) and couple it to said first plate-like body (102) at said first surface (104) provided with said gluing substance, so as to close said at least one through opening (112) defining a respective at least one blind opening (116), said second handling means (418) being provided with releasable pick-up means.

7. The apparatus (400) for making an alveolate support (100) according to claim 6, further comprising notching means arranged upstream of said first feeding section (402),
said notching means being configured to form said assembly of notches (108).

8. Alveolate support (100) for products, in particular for food products, said alveolate support (100) comprising:
- a first plate-like body (102) provided with a first surface (104) and a second surface (106) opposite the first surface (104) and spaced each other by a thickness (d1),
said first plate-like body (102) being provided with at least one through opening (112) passing through said thickness (d1) and configured to receive at least one of said products,
- a second plate-like body (114) fixed to said first surface (104) of said first plate-like body (102) so as to close said at least one through opening (112) defining a respective at least one blind opening (116), wherein
said first plate-like body (102) and optionally said second plate-like body (114) are formed with at least one multilayer paper cushion plate (PC1) comprising at least one embossed paper sheet (Le1, Lem).

9. The alveolate support (100) according to claim 8, wherein said at least one embossed paper sheet (Le1, Lem) is formed with a paper sheet having a grammage of 10 to 140 g/m², or of 10 to 100 g/m², or of 25 to 50 g/m², or of 30 to 45 g/m².

10. Packaging (300) for products, in particular for food products, comprising:
- an alveolate support (100) according to claim 8 or 9, and
- a box-shaped casing (200) provided with a cavity (202) configured to receive said alveolate support (100).
